# FASCICULE DE BREVET EUROPEEN

(11) **EP 2 340 344 B1**
(45) Date de publication et mention de la délivrance du brevet: **18.06.2014**
(21) Numéro de dépôt: 09752409.4
(22) Date de dépôt: 24.09.2009
(51) Int. Cl.: E05D 1/02

(54) **DISPOSITIF COMPORTANT AU MOINS UNE CHARNIÈRE INTÉGRÉE EN MATÉRIAU COMPOSITE À RENFORT DE LIAISON ININTERROMPU**
VORRICHTUNG MIT WENIGSTENS EINEM INTEGRIERTEN SCHARNIER AUS VERBUNDMATERIAL MIT EINER UNUNTERBROCHENEN VERBUNDVERSTÄRKUNG
DEVICE WITH AT LEAST ONE INTEGRATED COMPOSITE HINGE WITH CONTINUOUS REINFORCEMENTS

(30) Priorité: 26.09.2008 FR 0805302
(43) Date de publication de la demande: 06.07.2011
(73) Titulaire: Centre National d'Etudes Spatiales (CNES), 75039 Paris Cedex 01 (FR)
(72) Inventeur: CASTERAS, Christophe, F-31400 Toulouse (FR)
(74) Mandataire: Cabinet BARRE LAFORGUE & associés
(86) Numéro de dépôt international: PCT/FR2009/051817
(87) Numéro de publication internationale: WO 2010/034946

(56) Documents cités:
- EP-A- 1 085 152
- DE-A1- 4 224 699
- FR-A- 1 382 678
- FR-A1- 2 908 366
- US-A- 5 350 614
- US-B1- 7 354 033

## Description

L'invention concerne un dispositif comportant au moins une charnière intégrée non articulée comprenant au moins une portion souple intégrée entre deux portions, dites portions rigides, plus rigides que chaque portion souple, au moins en flexion autour d'un axe parallèle ou confondu à un axe théorique de pivotement de la charnière ainsi formée. Chaque portion rigide est formée en matériau composite, dit matériau composite rigide, chaque portion souple reliant lesdites portions rigides.

Dans tout le texte, on désigne par « matériau composite » tout matériau solide synthétique hétérogène comprenant au moins une structure de renfort, formée d'au moins un premier matériau, et adaptée pour conférer principalement des propriétés de résistance mécanique au dit matériau composite, cette structure de renfort étant associée à au moins une autre partie, dit matrice, formée en au moins un deuxième matériau polymère présentant des propriétés mécaniques différentes de celles de la structure de renfort. En particulier, cette expression couvre les matériaux composites traditionnellement constitués d'une structure de renfort formée de nappes, de bandes ou de tissus de fibres (ayant pour fonction de transmettre les contraintes au moins en traction longitudinale (dans le sens des fibres), et en général également les contraintes en compression longitudinale), cette structure de renfort étant noyée dans une matrice de matériau polymère (ayant pour fonction de conférer la forme générale et les dimensions du matériau, de soutenir la structure de renfort et de résister en compression transversale (orthogonalement aux fibres de la structure de renfort)). Mais elle désigne également notamment les matériaux multicouches (tels que ceux traditionnellement qualifiés de complexes ou de stratifiés), par exemple comprenant une âme centrale (formée d'une ou plusieurs couches, par exemple métallique(s) et/ou en matériau synthétique rigide en traction) faisant office de structure de renfort apte à transmettre des contraintes au moins en traction longitudinale (dans toute direction parallèle au plan de chaque couche constituant cette âme) interposée entre deux épaisseurs (formées elles-mêmes chacune d'une ou plusieurs couches) de matériaux polymères, ces deux épaisseurs faisant office de matrice.

Les charnières non articulées intégrées, par exemple du type dit charnière-film, sont connues depuis longtemps et font l'objet de nombreuses applications, notamment dans le domaine de l'emballage. Elles consistent en général en une réduction locale d'épaisseur d'un matériau élastique en flexion permettant de former une portion plus souple entre deux portions plus rigides de ce matériau.

De telles charnières connues ne présentent pas des caractéristiques mécaniques suffisantes dans certaines applications, par exemple dans le domaine spatial. En outre, elles sont généralement réservées à l'utilisation d'un matériau synthétique thermoplastique homogène.

US 7354033 décrit un dispositif formant charnière monolithique élastique non articulée entre deux portions d'une bande plate ou cintrée (tuilée) de type « joint de carpentier » formant ressort pouvant être formées en acier à ressort, en alliage de cuprobérilium ou d'un matériau composite ou autre. Dans un premier mode de réalisation, la charnière est formée d'une portion en un deuxième matériau plus souple que celui formant la bande ressort, par exemple un alliage à mémoire de forme, un acier, un alliage de cuivre béryllium. Dans un deuxième mode de réalisation, la charnière est formée d'une portion constituée du même matériau que celui de la bande formant ressort, mais en une épaisseur plus faible, à la façon des charnières-films. Le troisième mode de réalisation est similaire au deuxième et présente de surcroît des renforts latéraux en alliage à mémoire de forme.

Le premier mode de réalisation pose le problème de la fabrication fiable de la jonction entre la portion formant charnière et les portions formant la bande. En effet, la discontinuité de matériaux nécessairement présente au niveau de cette jonction entraîne des risques de défaillance et des difficultés de fabrication. En particulier, dans le domaine spatial et aéronautique, la tenue et la fiabilité d'une telle jonction aux sollicitations mécaniques, thermo-mécaniques et vibratoires sur le long terme est difficile à certifier.

Les autres modes de réalisation par réduction d'épaisseur sont limités à l'utilisation d'un matériau composite compatible avec la flexibilité attendue au niveau de la portion formant charnière d'épaisseur réduite. En particulier, il n'est pas possible d'utiliser un matériau composite dont la matrice est rigide et/ou à faible déformation avant rupture (compte tenu de la déformation en flexion nécessaire au niveau du rayon de courbure), non flexible, voire fragile, par exemple en polyméthacrylate ou en céramique. Par ailleurs, contrairement à ce qu'indique ce document, il est en fait impossible de réaliser une telle charnière qui puisse être pliée et dépliée plusieurs fois avec de faibles rayons de courbure sans rupture.

Le document US 5 350 614 décrit une charnière selon le préambule de la revendication 1.

Enfin, les charnières non articulées intégrées connues présentent toutes l'inconvénient de n'offrir, compte tenu de la nécessaire présence d'une portion souple intégrée entre deux portions plus rigides, qu'une médiocre résistance en compression ou en traction longitudinale à l'état déployé.

L'invention vise à pallier ces inconvénients.

L'invention vise donc en particulier à proposer un dispositif comprenant au moins une charnière intégrée non articulée entre des portions rigides pouvant être formées en un matériau composite quelconque, y compris à matrice non flexible au moins selon certaine(s) direction(s), la charnière pouvant présenter des propriétés adaptées à l'application envisagée, avec une fabrication simple et parfaitement fiable de la jonction entre la portion souple formant charnière et les portions plus rigides qu'elle relie.

L'invention vise également à proposer un tel dispositif pouvant faire l'objet de nombreuses variantes de réalisation, et compatible avec de nombreuses applications, y compris dans le domaine spatial et aéronautique.

L'invention vise encore à proposer un tel dispositif qui, de surcroît, peut être réalisé de façon à présenter une résistance améliorée en compression longitudinale à l'état déployé.

L'invention vise également à proposer un tel dispositif qui puisse être compatible avec une certaine souplesse en flexion desdites portions rigides et/ou de la charnière ainsi formée, dans un plan de flexion contenant l'axe théorique de pivotement de la charnière ou parallèle à cet axe, c'est-à-dire autour d'axes de flexion orthogonaux à l'axe de la charnière.

Plus particulièrement, l'invention vise à proposer un tel dispositif qui puisse être réalisé en présentant tout ou partie des propriétés suivantes :
- amplitude angulaire de débattement de la charnière de 0° à 180°, voire jusqu'à 360°,
- possibilité de réaliser une butée limitant l'ouverture de la charnière dans un sens à partir d'un certain angle,
- charnière présentant une certaine flexibilité de son axe théorique de pivotement, et permettant notamment de relier des bandes ressorts cintrées de type « joint de carpentier »,
- chaque portion souple formant charnière présentant en flexion autour de l'axe théorique de pivotement de la charnière, une souplesse au moins sensiblement plus grande que celle des portions rigides,
- diminution ou absence de jeux de fonctionnement,
- continuité de la raideur et de la résistance mécanique longitudinale en traction à l'état déployé,
- continuité de la raideur et de la résistance mécanique longitudinale en compression à l'état déployé,
- absence de frottement,
- tenue en fatigue aux pliages et aux dépliages répétés avec de faibles rayons de courbure,
- simplicité de fabrication,
- masse minimum,
- encombrement minimum notamment dans le sens de l'épaisseur (rayon de pliage et surépaisseurs réduits),
- coût de fabrication réduit.

Pour ce faire, l'invention concerne un dispositif comprenant au moins une portion souple intégrée entre deux portions, dites portions rigides, plus rigides que chaque portion souple (au moins en flexion autour d'un axe parallèle ou confondu à un axe théorique de pivotement de la charnière ainsi formée ; mais pouvant être flexibles dans un plan de flexion, dit plan transversal, parallèle à l'axe théorique de pivotement de la charnière et ne passant pas par cet axe), chaque portion rigide étant formée en matériau composite, dit matériau composite rigide, ladite portion souple reliant lesdites portions rigides et étant adaptée pour former entre elles une charnière souple, chaque portion rigide comprenant au moins une structure de renfort du matériau composite rigide qui la compose, apte à impartir une résistance au moins en traction longitudinale (en général déterminant des résistances en traction et en compression longitudinales) à ce matériau composite rigide, et une matrice au sein de laquelle s'étend la structure de renfort, chaque portion souple étant formée:
- d'un matériau, dit matériau souple, choisi dans le groupe formé des matériaux, dits matériaux composites souples, comportant :
   - une armature de renfort comprenant au moins une couche, dite couche de liaison, d'une structure de renfort commune au(x) matériau(x) composite(s) rigide(s) formant chaque portion rigide, chaque couche de liaison s'étendant en continuité et en commun entre lesdites portions rigides, et étant adaptée pour pouvoir être flexible,
   - une matrice au sein de laquelle s'étend l'armature de renfort, cette matrice étant elle-même formée en matériau plus souple en flexion que celui constituant une matrice de matériau composite rigide de chaque portion rigide,
- d'au moins une couche de liaison d'une structure de renfort commune au(x) matériau(x) composite(s) rigide(s) formant chaque portion rigide, chaque couche de liaison s'étendant en continuité et en commun entre lesdites portions rigides, et étant adaptée pour pouvoir être flexible (ledit matériau souple, et donc la portion souple constituée de ce matériau, étant alors exclusivement constitués d'une ou plusieurs couche(s) des structures de renfort des portions rigides faisant office de couche(s) de liaison, et étant exempts de matrice), caractérisé en ce qu'il présente des chants en regard à l'état déployé dans lequel les portions rigides et chaque portion souple sont en prolongement les unes des autres, lesdits chants en regard étant agencés à l'état déployé pour pouvoir faire office de butée en compression longitudinale tout en autorisant un repliement de la charnière ainsi formée au moins dans un sens à partir de l'état déployé.

Par ailleurs, avantageusement, un dispositif selon l'invention est aussi caractérisé en ce qu'au moins une portion souple s'étend sur une partie seulement de l'épaisseur et/ou de ladite largeur de jonction desdites portions rigides, et en ce que lesdites portions rigides sont prolongées l'une vers l'autre selon au moins une autre partie de cette épaisseur et/ou de cette largeur de jonction de façon à présenter des chants qui sont en regard l'un de l'autre à l'état déployé dans lequel ) les portions rigides et chaque portion souple sont en prolongement les unes des autres, et peuvent ainsi supporter un effort de compression traversant la charnière. De la sorte, le dispositif selon l'invention présente des caractéristiques améliorées en compression longitudinale à l'état déployé.

Dans une variante de l'invention, lesdits chants en regard sont adaptés pour permettre de bloquer le dispositif à l'état déployé en interdisant le repliement de la charnière dans un sens et en autorisant le repliement de la charnière uniquement dans l'autre sens. Dans une autre variante de l'invention, lesdits chants en regard sont adaptés pour permettre le repliement de la charnière dans les deux sens.

Ainsi, dans un dispositif selon l'invention, la réalisation et l'intégration d'au moins une portion souple formant charnière entre les deux portions rigides est particulièrement simple et fiable, la liaison entre ces différentes portions étant assurée par chaque couche de liaison de l'armature de renfort. En outre, la matrice de la portion souple peut être adaptée pour présenter des propriétés mécaniques appropriées en fonction de l'application, et ce de façon totalement indépendante du(des) matériau(x) composite(s) rigide(s) constituant les portions rigides. Il est ainsi possible en particulier de faire varier les propriétés d'élasticité (notamment en choisissant un matériau de module d'Young approprié), les dimensions et les gammes de déformations admissibles de chaque portion souple. Il est en particulier possible de maîtriser parfaitement, notamment de minimiser, les contraintes de flexion de la charnière ainsi obtenue. En outre, le dispositif selon l'invention peut être conçu de façon à présenter un très faible encombrement, et en particulier un faible angle de pliage (qui peut être égal à 0°) et un faible rayon de courbure de la portion souple à l'état plié. Par ailleurs, un dispositif selon l'invention peut également être adapté pour pouvoir transmettre des efforts de torsion à l'état plié de la charnière, autour d'un axe orthogonal à l'axe de pivotement de la charnière. Une telle raideur en torsion à l'état plié permet par exemple de stabiliser le dispositif, notamment au lancement d'un système spatial dans lequel il est incorporé (par exemple panneaux solaires repliés en accordéon).

La portion souple peut, dans une variante de réalisation, être formée uniquement de ladite armature de renfort formée d'une ou plusieurs couche(s) de liaison, c'est-à-dire d'une ou plusieurs couche(s) commune(s) aux structures de renfort du(des) matériau(x) composite(s) rigide(s) des portions rigides. Dans cette variante de réalisation, ledit matériau souple constituant la portion souple est exclusivement constitué de ladite armature de renfort, et est donc exempt de matrice. Le dispositif selon l'invention est alors constitué de deux portions rigides en matériau(x) composite(s) reliées entre elles par au moins une partie commune de leurs structures de renfort. Cette variante est en particulier avantageuse dans le cas où lesdites pièces rigides sont formées de matériaux composites qui sont constitués de complexes multicouches, par exemple sous forme d'une structure de renfort constituant une âme centrale, cette structure de renfort étant recouverte sur chacune de ses faces principales d'au moins un film polymère. Dans ce cas, la portion souple peut être formée uniquement d'une portion de l'âme centrale reliant les deux portions rigides.

Selon une autre variante de l'invention, ledit matériau souple formant ladite portion souple comprend aussi une matrice au sein de laquelle s'étend l'armature de renfort. Ledit matériau souple est donc alors également un matériau composite souple Cette matrice dudit matériau composite souple est formée d'un matériau différent du matériau constitutif de la matrice de chaque matériau composite rigide constituant chaque portion rigide. En particulier cette matrice dudit matériau composite souple est formée d'un matériau plus souple en flexion (c'est-à-dire de module d'Young plus faible et de déformation en flexion avant rupture plus grande) que le matériau constituant la matrice du matériau composite rigide de chaque portion rigide. Cette matrice du matériau composite souple est souple en flexion et choisie, ainsi que l'armature de renfort, de façon à ce que ladite portion souple soit elle-même souple en flexion et forme une charnière intégrée reliant les portions rigides.

Par ailleurs, au moins une couche de liaison peut présenter au moins un organe résistant en traction s'étendant longitudinalement continûment et de façon ininterrompue au sein desdites portions rigides et de ladite portion souple. De la sorte, dans ce mode de réalisation avantageux de l'invention, la liaison entre les deux portions rigides est au moins pour partie assurée par ledit organe, et donc par la portion souple correspondante elle-même. Avantageusement et selon l'invention, ledit organe est choisi dans le groupe formé des monofils, des câbles, des faisceaux, des tissus, des non-tissés, des bandes, des nappes, des matelas et des feuilles et des complexes multicouches.

En outre, avantageusement, chaque couche de liaison peut être choisie dans le groupe formé des nappes de fibres synthétiques tissées, des nappes de fibres synthétiques non-tissées, monodirectionnelles ou non, des matelas, des nappes de bandes synthétiques tissées, des nappes de bandes synthétiques non-tissées, des feuilles de matériaux synthétiques, des feuilles de matériaux métalliques, des complexes multicouches comprenant plusieurs couches, chaque couche étant en l'une de ces matières.

Dans certains modes de réalisation avantageux d'un dispositif selon l'invention, chaque couche de liaison est à base de fibres synthétiques choisies dans le groupe formé des fibres de verre ; des fibres de carbone ; des fibres métalliques, des trichites (« whiskers ») métalliques ; des fibres de bore ; des fibres de béryllium ; des fibres céramiques (Al2O3, SiC, Si3N4, BeO... ) ; des fibres d'amiante ; des fibres cellulosiques ; des fibres de polymères : notamment des fibres de polyamide aromatique ou non, des fibres de polyester, des fibres de polyéthylène orienté ou non, des fibres de PBO : poly(benzoxazole), des chlorofibres, des fibres acryliques, des fibres de polypropylène, des fibres de polyuréthane, des fibres d'aramide ; et de leurs mélanges.

Dans un mode de réalisation possible d'un dispositif selon l'invention, chaque couche de la structure de renfort du matériau composite rigide formant lesdites portions rigides s'étend continûment entre les portions rigides de façon à former une couche de liaison. Autrement dit, dans ce mode de réalisation, l'intégralité de la structure de renfort du(des) matériau(x) composite(s) rigide(s) est utilisée pour former, au moins pour partie, l'armature de renfort d'une portion souple.

Réciproquement, dans une variante de réalisation d'un dispositif selon l'invention, l'armature de renfort du matériau souple de chaque portion souple est constituée uniquement d'au moins une couche de liaison (de la structure de renfort des portions rigides). Ainsi, dans la variante où le matériau souple est un matériau composite souple, la structure de renfort des portions rigides et l'armature de renfort du matériau composite souple sont identiques, les matériaux composites rigides et souples ayant un renfort commun, seules les matrices étant différentes. En variante, rien n'empêche cependant de prévoir que l'armature de renfort du matériau composite souple formant une portion souple comprenne au moins une couche supplémentaire qui lui est propre (c'est-à-dire qui ne fait pas partie de la structure de renfort du matériau composite rigide) afin de conférer à ladite portion souple des propriétés spécifiques.

Par ailleurs, avantageusement et selon l'invention, lesdites portions rigides et chaque portion souple présentent des épaisseurs similaires. C'est en effet un avantage particulier d'un dispositif selon l'invention que de pouvoir être réalisé de façon que chaque portion souple présente une épaisseur similaire à celle des portions rigides, c'est-à-dire sans nécessiter une réduction d'épaisseur. En particulier, avantageusement un dispositif selon l'invention est caractérisé en ce que lesdites portions rigides présentent des épaisseurs similaires et en ce qu'il présente, à l'état déployé, une épaisseur similaire entre lesdites portions rigides. Ainsi, dans ce mode de réalisation, un dispositif selon l'invention présente une continuité d'épaisseur à l'état déployé entre les portions rigides.

Mais, à l'inverse, un dispositif selon l'invention peut tout aussi bien être réalisé avec une réduction d'épaisseur de chaque portion souple, ou, plus généralement de la liaison entre les deux portions rigides, si une telle réduction d'épaisseur est considérée comme nécessaire ou avantageuse. Les propriétés mécaniques de chaque portion souple peuvent être adaptées facilement, quelle que soit l'épaisseur requise, sans être imposées par les propriétés mécaniques des portions rigides.

Selon l'invention, seule une partie d'épaisseur de la structure de renfort desdites portions rigides s'étend continûment entre lesdites portions rigides de façon à faire office de couche(s) de liaison, l'autre partie de la structure de renfort desdites portions rigides étant interrompue entre les deux portions rigides. Avantageusement, les pièces rigides sont prolongées l'une vers l'autre dans la partie de leur épaisseur où la structure de renfort est interrompue de façon à présenter des chants venant en regard l'un de l'autre à l'état déployé et susceptibles de former une butée en compression longitudinale conférant au dispositif une résistance améliorée en compression longitudinale.

Comme mentionné ci-dessus, il n'y a pas de limite de principe en ce qui concerne la forme de réalisation de la matrice d'un matériau composite souple d'un dispositif selon l'invention, dès lors qu'elle est adaptée à la formation de ladite portion souple formant charnière. Avantageusement, la matrice dudit matériau composite souple est choisie parmi les matrices organiques souples ductiles et de grande déformation en flexion à la rupture. Avantageusement, la matrice dudit matériau composite souple est formée d'au moins un matériau choisi dans le groupe formé des caoutchoucs naturels (NR); des élastomères (notamment les élastomères suivants : polyacrylate (ACM), polyesteruréthane (AU), caoutchouc bromobutyl (BIIR), polybutadiène (BR), caoutchouc chlorobutyl (CIIR), polyéthylène chloré (CM), homopolymère d'épichlorhydrine (CO), copolymère de polyesteramide (CPA), copolymère de polyester-glycol (CPE), polychloroprène (CR), polyéthylène chlorosulfoné (CSM), copolymère d'éthylène et d'acrylate de méthyle (EAM), copolymère d'épichlorhydrine et d'oxyde d'éthylène (ECO), terpolymère d'éthylène de propylène et d'un diène (EPDM), copolymère d'éthylène et de propylène (EPM), polyétheruréthane (EU), copolymère d'éthylène et d'acétate de vinyle (EVM ou EVA), élastomères fluorocarbonés (FKM et FPM), silicone avec groupes méthyle et fluorés (FVMQ), copolymère de butadiène et d'acrylonitrile hydrogéné (H-NBR), caoutchouc butyl (IIR), polyisoprène synthétique (IR), méthylsilicone (MQ), copolymère de butadiène et d'acrylonitrile (NBR), polyéther d'éthylèneglycol et d'un acide (OT), méthylphénylsilicone (PMQ), polydichlorophosphazènes avec substitution de groupements fluorés (PNF), polynorbornène (PNR), polyuréthanes (PUR), méthylsilicone avec groupes phényle et vinyle (PVMQ), caoutchoucs de silicones (Q), copolymère de styrène et butadiène (SBR), copolymères-blocs de styrène-butadiène-styrène (SBS), copolymères-blocs de styrène-éthylène-butène (ou butylène)- styrène (SEBS), copolymères-blocs de styrène-isoprène-styrène (SIS), caoutchoucs synthétiques (SR), polysulfures (TM ou T), caoutchoucs thermoplastiques (TPE), élastomères thermoplastiques dérivés des polyoléfines (TPO), polyuréthanes thermoplastiques (TPU), méthylsilicone avec groupements vinyle (VMQ), caoutchouc butyl halogéné (XIIR), caoutchouc nitrile carboxylé (XNBR)); des résines de polyéthylène; des résines de polystyrène; des mousses de polyéthylène; des mousses de polystyrène. Le matériau constitutif de la matrice dudit matériau composite souple peut être formé de tout autre matériau répondant aux exigences de souplesse et déformation de la liaison souple à obtenir, et peut être en outre chargé ou non de particules aptes à lui conférer toute propriété complémentaire appropriée (par exemple particules magnétiques, électriques, thermiques...). En outre ce matériau peut se présenter sous forme monolithique, ou sous forme d'une mousse, ou encore sous forme d'un complexe multicouche, ou autre.

Dans une variante de réalisation conforme à l'invention, la matrice dudit matériau composite souple est un complexe multicouche de films polymères choisis dans le groupe comprenant : les polyoléfines -notamment les polyéthylènes, les polypropylènes-, les acryliques, les polyamides aromatiques ou non, les polyimides (Kapton) aromatiques ou non, les polyesters, le PBO: poly(benzoxazole), les poly(arylène éther benzimidazole) (TOR), les polyuréthanes, le PVC (polychlorure de vinyle).

Par ailleurs, selon l'invention, une portion souple peut ou non s'étendre sur toute la largeur de jonction des portions rigides, c'est-à-dire dans tout l'espace qui s'étend entre les extrémités (notamment chants en regard à l'état déployé) des portions rigides à relier. La largeur de jonction est la dimension considérée selon la direction correspondant à l'axe théorique de pivotement de la charnière formée par chaque portion souple. Ainsi, dans un mode de réalisation, un dispositif selon l'invention comprend une portion souple s'étendant continûment selon toute ladite largeur de jonction desdites portions rigides. En variante, un dispositif selon l'invention comprend plusieurs portions souples distinctes et séparées les unes des autres, réparties dans la largeur de jonction entre lesdites portions rigides, et séparées les unes des autres; la largeur (dimension parallèlement à l'axe théorique de pivotement de la charnière) de chaque portion souple étant inférieure à ladite largeur de jonction.

Il est à noter que chaque portion souple doit être adaptée pour pouvoir former une charnière entre les deux portions rigides, ce qui suppose en particulier des dimensions et formes appropriées de cette portion souple, selon les dimensions et formes des extrémités en regard des portions rigides. En particulier, chaque portion souple doit permettre le passage, entre les deux portions rigides, d'un plan contenant ledit axe théorique de pivotement. Ainsi, les extrémités en ) regard des deux portions rigides doivent être écartées l'une de l'autre, notamment par chaque portion souple, d'une distance suffisante pour permettre la flexion de chaque portion souple, notamment pour permettre le passage d'un plan contenant ledit axe théorique de pivotement entre ces deux extrémités.

Un dispositif selon l'invention peut comprendre avantageusement des garnitures rapportées en surépaisseur sur chaque portion rigide (par exemple par collage, moulage (séparé ou simultané à celui des portions rigides), ou fusion avec la matrice des portions rigides), lesdites garnitures étant disposées de façon à présenter des faces venant en contact l'une de l'autre - notamment des chants venant en regard à l'état déployé- aptes à faire butées permettant de transmettre des efforts de compression longitudinale et/ou de torsion au travers de la charnière dépliée et/ou limitant dans un sens l'amplitude angulaire de déploiement de la charnière ainsi formée.

Dans un dispositif selon l'invention les portions rigides et chaque portion souple peuvent présenter des formes et dimensions extrêmement diverses, quasiment sans limitation dès lors que la liaison entre les portions rigides peut-être formée par chaque couche de liaison et par chaque portion souple comme mentionné ci-dessus. De préférence, chaque portion souple est formée d'un bloc homogène de matériau composite souple interposé entre les deux portions rigides, l'ensemble formant une seule pièce monolithique. Dans le cas où plusieurs portions souples sont prévues entre deux portions rigides, ces portions souples peuvent être formées du même matériau composite souple- notamment avec la même matrice souple-, ou au contraire, avec des matériaux composites souples différents-notamment des matrices souples différentes.

Dans un mode de réalisation, chaque portion rigide est en forme générale de bande et chaque portion souple est également en forme générale de bande. Il peut s'agir de bandes planes (plaques ou plaquettes), ou au contraire de bandes plus ou moins gauches ou cintrées de type « joint de carpentier ». Par exemple, dans un mode de réalisation, les portions rigides sont cintrées dans le même sens autour d'un axe sensiblement orthogonal à l'axe théorique de pivotement de la charnière formée par chaque portion souple. Ainsi, avantageusement, dans un mode de réalisation conforme à l'invention, chaque portion rigide est en forme générale de bande ressort cintrée suivant un axe longitudinal (c'est-à-dire de façon à former un dispositif de type « joint de carpentier »), et chaque portion souple est également en forme générale de bande cintrée selon le même axe.

Par ailleurs, les deux portions rigides peuvent être identiques ou non, formées d'un même matériau composite rigide, ou au contraire chacune dans un matériau composite rigide, les deux matériaux composites rigides étant différents. Dans un dispositif selon l'invention, les bandes constituant les portions rigides peuvent être flexibles transversalement, c'est-à-dire autour de leur axe longitudinal orthogonal à l'axe théorique de pivotement de la charnière ainsi formée. Autrement dit, les portions rigides peuvent être plus souples en flexion autour de cet axe longitudinal qu'en flexion dans le plan contenant cet axe longitudinal.

Un dispositif selon l'invention peut être formé de toute structure mécanique incorporant au moins une charnière intégrée entre deux portions rigides en matériau(x) composite(s), ou être intégré dans une telle structure ou dans un ensemble plus complexe. Il peut s'agir par exemple d'un mât déployable de système spatial replié au sol et se déployant élastiquement après lancement dans l'espace; ou d'une pièce de structure de véhicule terrestre, maritime, aérien ou spatial (par exemple pour former une charnière de battant ou de couvercle en matériau composite), de meuble ou autres équipements ou engins domestiques, de sport ou de loisirs ; ou encore d'un emballage en matériau composite; ou de toute autre structure. Les portions rigides peuvent être intégrées dans toute structure ou ensemble plus complexe (panneaux à nid-d'abeilles, panneaux nervurés,...).

D'autres buts, caractéristiques, et avantages de l'invention apparaîtront à la lecture de la description suivante qui se réfère aux figures annexées représentant à titre d'exemples non limitatifs différents modes de réalisation de l'invention et dans lesquelles :
- la figure 1a est une vue schématique de dessus d'un dispositif selon un deuxième mode de réalisation de l'invention,
- la figure 1b est une vue schématique en coupe longitudinale selon la ligne II-II de la figure la,
- la figure 1c est une vue schématique en perspective représentant le dispositif à l'état replié,
- la figure 1d est une vue schématique en perspective représentant le dispositif à l'état déployé,
- la figure 2a est une vue schématique en coupe longitudinale d'un dispositif selon un troisième mode de réalisation de l'invention à l'état déployé,
- la figure 2b est une vue schématique similaire à la figure 2a représentant le dispositif à l'état replié,
- la figure 2c est une vue schématique de dessus du dispositif selon le troisième mode de réalisation de l'invention,
- la figure 2d est une vue schématique de dessous du dispositif selon le troisième mode de réalisation de l'invention,
- la figure 3a est une vue schématique en coupe longitudinale d'un dispositif selon un mode de réalisation ne faisant pas partie de l'invention à l'état déployé,
- la figure 3b est une vue schématique similaire à la figure 3a représentant le dispositif à l'état replié,
- la figure 3c est une vue schématique de dessus du dispositif selon le mode de réalisation de la figure 3a,
- la figure 3d est une vue schématique de dessous du dispositif selon le mode de réalisation de la figure 3a.

Dans le premier mode de réalisation de l'invention, le dispositif selon l'invention comprend deux plaquettes rigides 10 formées en matériau composite rigide, et présentant chacune un chant d'extrémité orienté vers l'autre plaquette 10, les chants d'extrémité en regard des deux plaquettes étant reliées par une portion plus souple 11 en matériau composite souple formant une charnière entre les deux plaquettes 10 et reliant ces dernières. Dans les exemples représentés, les chants en regard des plaquettes 10 sont des faces planes parallèles l'une à l'autre. L'invention s'applique tout aussi bien pour former une charnière souple entre deux pièces rigides présentant des extrémités en regard l'une de l'autre de formes différentes, plus ou moins complexes, et les formes et dimensions de la portion souple qui les relie doivent être adaptées pour permettre de former une charnière souple, notamment en particulier pour permettre le pivotement en flexion autour d'un axe théorique de pivotement interposé entre les deux extrémités des pièces rigides. Les extrémités des plaquettes 10 reliées par la portion souple 11 doivent être écartées l'une de l'autre d'une distance suffisante pour permettre le passage dudit axe théorique de pivotement, de façon à autoriser la flexion de la portion souple 11. Cela est d'autant plus vrai si ces extrémités en regard sont de formes tourmentées.

Le matériau composite rigide formant chaque plaquette 10 comprend une structure de renfort 12 qui, dans l'exemple représenté, comprend une pluralité de couches parallèles entre elles et au plan principal de la plaquette, distantes les unes des autres et noyées dans une matrice 14. Il s'agit par exemple de couches de fibres synthétiques, notamment des fibres de carbone, tissées ou non-tissées ou simplement déposées en faisceaux, nappes ou bandes adjacentes parallèles, pré-imprégnées ou non. La structure de renfort 12 comporte en tout état de cause au moins une série de fibres, ou autres organes résistant en traction, s'étendant longitudinalement continûment et de façon ininterrompue entre les deux plaquettes 10 et dans la portion 11 souple.

Dans le premier mode de réalisation, chacune des couches de la structure de renfort 12 de chaque plaquette 10 est prolongée au sein de la portion 11 souple et constitue donc une couche 13 de liaison entre les deux plaquettes 10, la structure de renfort 12 formant également l'armature de renfort de la portion 11 souple. Réciproquement, l'armature de renfort du matériau composite souple constituant la portion 11 souple est constituée uniquement de la structure de renfort 12.

Ainsi, dans le dispositif selon l'invention, le renfort 12, des matériaux composites constituant respectivement les deux plaquettes rigides 10 et la portion souple 11 permet de relier entre elles les deux plaquettes 10, et permet de relier la portion souple 11 à chacune des deux plaquettes 10, ce qui permet d'assurer de façon fiable et simple la tenue en traction de la charnière ainsi formée, et facilite et accélère par ailleurs sa fabrication. En effet, dans un tel dispositif, le renfort étant commun entre les plaquettes 10 et la portion souple 11, l'ensemble de ces différentes portions peut-être fabriqué simultanément.

Par contre, le matériau composite rigide formant les plaquettes 10 (qui peut être le même pour les deux plaquettes 10 ou au contraire différent d'une plaquette à l'autre) est différent du matériau composite souple formant la portion souple 11, et ces matériaux composites rigide(s) et souple diffèrent par la matrice au sein de laquelle le renfort 12, 13 s'étend. La matrice 14 de chaque matériau composite rigide constituant une plaquette 10 est plus rigide que la matrice 19 du matériau composite souple constituant la portion souple 11. La matrice 19 du matériau composite souple est aussi choisie de façon à conférer à la portion souple 11 les propriétés de souplesse en flexion recherchées. La matrice 14 du matériau composite rigide est quant à elle choisie en fonction des propriétés mécaniques requises pour les plaquettes 10, selon leur application. Par ailleurs, ces deux matrices 14, 19 sont choisies de façon à être compatibles l'une avec l'autre, au moins lors de la fabrication du dispositif selon l'invention. De préférence les deux matrices 14, 19 appartiennent à la même famille chimique de façon à pouvoir être mises en oeuvre par des procédés de fabrication similaires.

Par exemple, la matrice 14 de chaque matériau composite rigide est choisie parmi les polymères thermoplastiques : polyéthylènes, polystyrènes, polyéthers cétone ; ou thermodurcissables : résines polyester, résines époxy, résines phénoliques, résines polyimides, résines cyanate ester et résines de mélamine ; et la matrice 19 du matériau composite souple est choisie parmi les caoutchoucs naturels, les élastomères de silicone, les élastomères de polyuréthane, les élastomères de polychloroprène, les polyéthylènes, les polystyrènes, les résines, les résines chargée de particules magnétiques, les mousses synthétiques.

Par ailleurs, dans le premier mode de réalisation, les plaquettes 10 et la portion souple 11 sont formées avec la même épaisseur, et avec la même largeur. Ainsi, la portion souple 11 s'étend en largeur sur toute la largeur des plaquettes 10, les deux plaquettes 10 ayant elles-mêmes la même largeur. En outre, l'épaisseur du dispositif sur l'invention est sensiblement constante à l'état déployé.

Les caractéristiques mécaniques du renfort 12, 13 et de la matrice 19 du matériau composite souple sont choisies de façon à permettre le fonctionnement de la charnière ainsi formée, c'est-à-dire en permettant une flexion qui, par exemple, est de 180°.

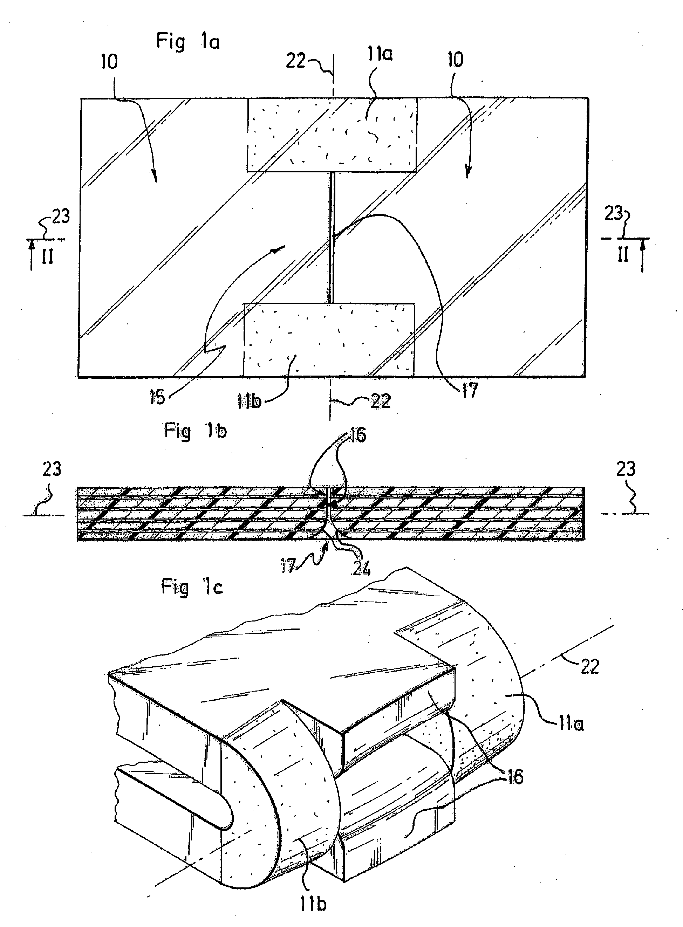

Le deuxième mode de réalisation diffère du premier d'une part par le fait que les plaquettes 10 sont cintrées toutes les deux dans le même sens autour d'un axe longitudinal 23 sensiblement orthogonal à l'axe 22 théorique de pivotement de la charnière formée entre elles, de façon à former un dispositif de type dit « joint de carpentier », et, d'autre part, par le fait que la charnière est formée non pas d'une seule portion souple, mais d'une pluralité de portions souples latérales séparées les unes des autres -notamment, dans l'exemple représenté, deux portions souples 11a, 11b latérales d'extrémité séparées l'une de l'autre- par une portion médiane 15 où les deux plaquettes 10 sont prolongées l'une vers l'autre de façon à présenter des chants d'extrémité 16 qui s'étendent transversalement et sont en regard l'un de l'autre à l'état déployé (dans lequel les plaquettes 10 et les portions souples 11a, 11b sont en prolongement longitudinal les unes des autres, la charnière étant dépliée comme représenté sur les figures 1a et 1b).

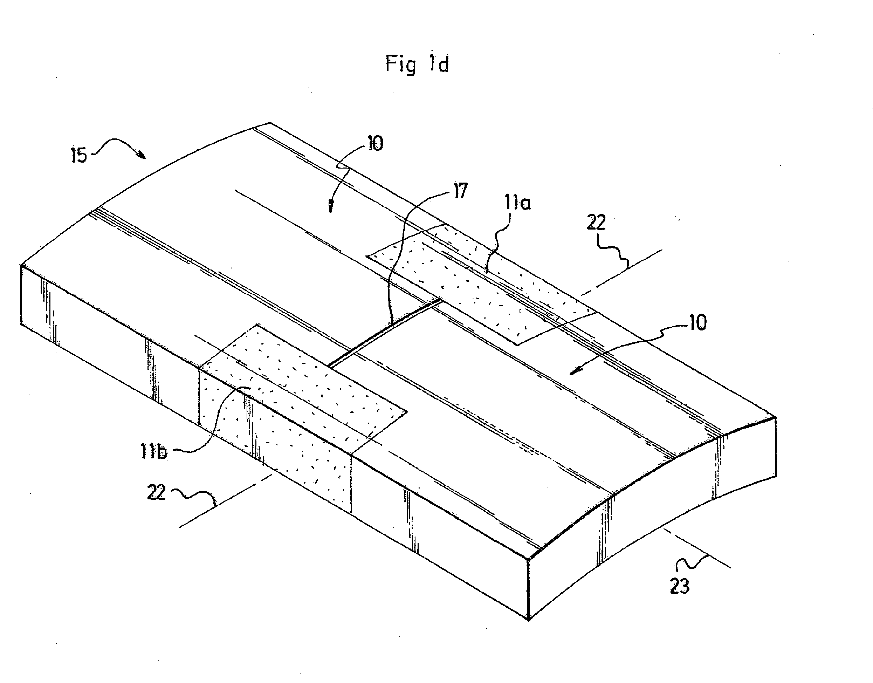

Le léger cintrage des plaquettes 10 et des portions souples 11a, 11b est visible figure 1c et 1d. L'invention permet ainsi d'obtenir une charnière qui est flexible autour de l'axe longitudinal 23 des plaquettes 10, c'est-à-dire dans un plan de flexion contenant l'axe théorique de pivotement 22 et ne passant pas par les plaquettes 10 (perpendiculaire à l'axe longitudinal 23 des plaquettes 10 lorsque cet axe 23 longitudinal existe), et est donc compatible avec cette flexibilité transversale des plaquettes 10. Le dispositif selon l'invention permet donc de réaliser de façon simple, fiable, et compatible avec un environnement spatial, une structure à déploiement élastique spontané de type « joint de carpentier ». Il est à noter en outre que le dispositif selon l'invention présente un faible encombrement, notamment avec un faible rayon de courbure de la portion souple à l'état plié et un angle de pliage qui peut être faible (jusqu'à 0°). L'invention permet également de maîtriser et de minimiser les contraintes de flexion de la charnière ainsi formée. Également, un dispositif selon l'invention permet de transmettre des efforts de torsion à l'état plié de la charnière, autour d'un axe au moins sensiblement orthogonal au plan des plaquettes 10. Cette raideur en torsion à l'état plié permet de stabiliser le dispositif, notamment au lancement d'un système spatial dans lequel il est incorporé (par exemple panneaux solaires repliés en accordéon).

Les deux portions souples 11a, 11b d'extrémités latérales sont réalisées en un matériau composite souple qui est également adapté pour leur permettre de subir non seulement la déformation en flexion correspondant au pliage et au dépliage de la charnière, mais également une légère déformation en flexion de l'axe théorique de pivotement de la charnière, imposée par la forme légèrement cintrée des plaquettes 10, lors du pliage de la charnière ainsi formée. La pluralité de portions souples 11a, 11b interposées entre les deux plaquettes 10 facilite cette légère déformation.

Par ailleurs, les prolongements des plaquettes 10 dans la portion médiane 15 entre les portions souples 11a, 11b formant des chants d'extrémité 16 sont normalement séparés par une fente 17 de faible largeur lorsque le dispositif est à l'état déployé. Les chants d'extrémité 16 font office de butée axiale longitudinale permettant notamment au dispositif selon l'invention de résister aux contraintes éventuelles de compression longitudinale ainsi qu'aux moments de torsion d'axe orthogonal aux plaquettes, et de transmettre de telles contraintes. Les chants 16 sont cependant adaptés pour permettre le pivotement de la charnière par flexion des portions souples 11a et 11b. Pour ce faire, comme représenté figure 1b, ils présentent par exemple des bordures 24 arrondies du côté du sens de pivotement souhaité. Rien n'empêche de prévoir en variante non représentée des chants 16 entièrement hémi-cylindriques pouvant rouler l'un sur l'autre lors du pliage de la charnière pour permettre un pivotement dans les deux sens. Rien n'empêche encore, selon une autre variante non représentée, de prévoir des chants 16 entièrement plans, mais suffisamment écartés l'un de l'autre pour ne pas gêner le pivotement, tout en assurant une butée axiale longitudinale à partir d'une certaine déformation en compression axiale des portions souples 11a, 11b permettant de rattraper le jeu entre les chants 16.

Il va de soi que ce deuxième mode de réalisation peut faire l'objet lui-même de nombreuses variantes en ce qui concerne le nombre et la disposition des portions souples. Par exemple, il est possible de prévoir une seule portion souple médiane interposée entre deux prolongements latéraux des portions rigides.

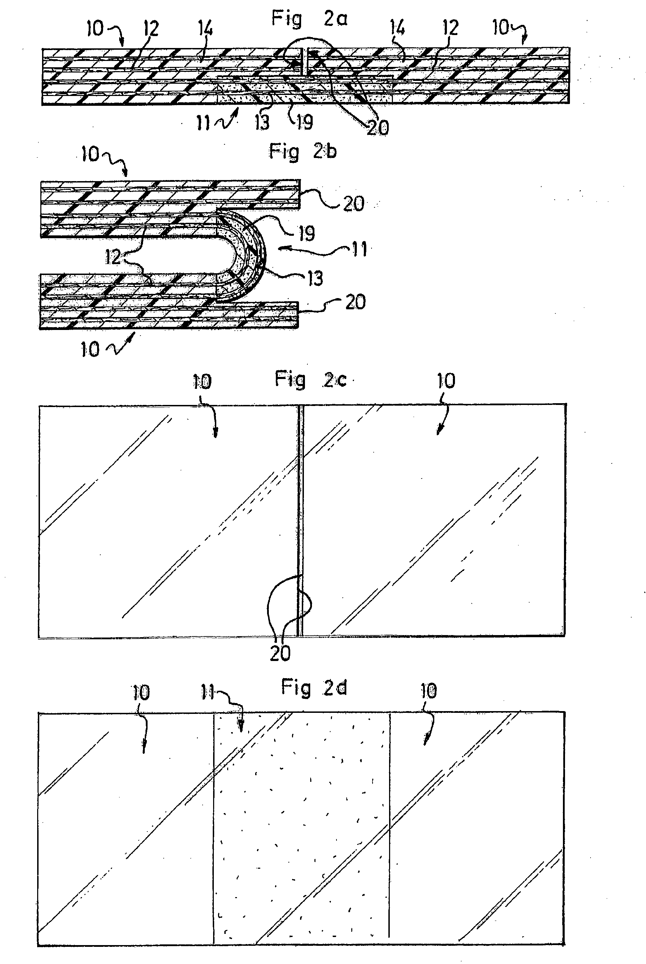

Le troisième mode de réalisation représenté sur les figures 2a à 2d diffère du premier mode de réalisation en ce que la portion souple 11 formant charnière entre les deux plaquettes 10 ne s'étend pas sur toute l'épaisseur des plaquettes 10 mais uniquement sur une partie de cette épaisseur, à partir de l'une des faces principales des plaquettes 10. Sur l'autre partie de l'épaisseur des plaquettes 10, ces dernières sont prolongées de façon à former également des chants 20 d'extrémité s'étendant transversalement et venant en regard l'un de l'autre à l'état déployé de façon à faire office de butée en compression longitudinale. Les chants 20 s'étendent selon toute la largeur des plaquettes 10 et permettent aussi de bloquer le dispositif selon l'invention à l'état déployé en interdisant le repliement de la charnière dans un sens, tout en autorisant le repliement de la charnière uniquement dans l'autre sens comme représenté figure 2b. À l'état déployé, le dispositif présente encore une épaisseur sensiblement constante entre les deux plaquettes 10 et au niveau de la charnière ainsi formée. Comme on le voit figures 2a et 2b, dans ce mode de réalisation, seule une partie des couches formant la structure de renfort 12 des plaquettes rigides 10 est prolongée dans la portion souple 11 et entre les deux plaquettes 10 de façon à faire office de couches de liaison entre ces différentes portions 10, 11. Les couches de la structure de renfort 12 dans la partie d'épaisseur correspondant aux chants 20 d'extrémité sont au contraire interrompues, la matrice 14 des plaquettes 10 est prolongée jusqu'à chacun des chants 20 d'extrémité. La matrice 19 du matériau composite souple constituant la portion souple 11 s'étend uniquement sur une partie de l'épaisseur en regard des plaquettes 10.

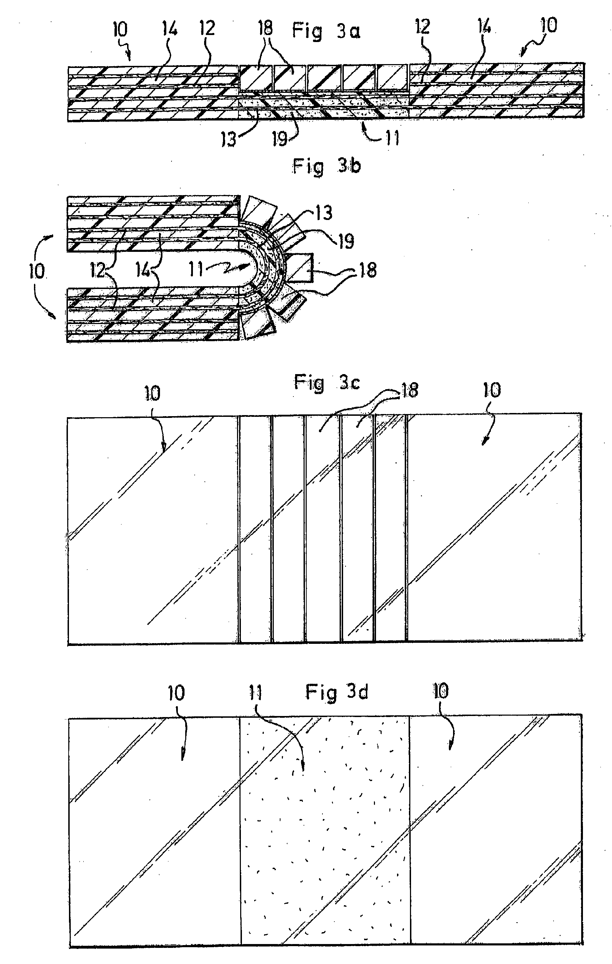

Le quatrième mode de réalisation représenté sur les figures 3a à 3d ne fait pas partie de l'invention et diffère du troisième mode de réalisation par le fait que les prolongements formant les chants 20 en regard à l'état déployé sont remplacés par une pluralité de cales 18 superposées à la portion souple 11 et collées à cette dernière pour compléter l'épaisseur entre les plaquettes 10, les différentes cales 18 se jouxtant les unes les autres de façon à faire office de butée en compression longitudinale à l'état déployé (figures 3a et 3c). Les cales 18 s'étendent selon la largeur des plaquettes 10 parallèles les unes aux autres et permettent aussi de bloquer le dispositif selon l'invention à l'état déployé en interdisant le repliement de la charnière dans un sens, et en autorisant le repliement de la charnière uniquement dans l'autre sens comme représenté sur la figure 3b. Les cales 18 peuvent être réalisées en tous matériaux rigides en compression, par exemple dans le même matériau que la matrice 14 du matériau composite rigide constituant l'une au moins des plaquettes 10.

L'invention peut faire l'objet de très nombreuses variantes de réalisation par rapport aux différents modes de réalisation représentés sur les figures et décrits ci-dessus uniquement à titre d'exemples, qui peuvent être d'ailleurs combinés en tout ou partie. Par exemple il est possible de prévoir des structures de renfort et/ou des armatures de renfort hétérogène, c'est-à-dire formées de plusieurs couches ou autres éléments différents, par exemple une ou plusieurs couche(s) de fibres tissées, une ou plusieurs épaisseur(s) multicouche(s) métallique(s), une ou plusieurs nappe(s) de fibres... De même, les matrices formant les matériaux composites peuvent être hétérogènes au sein de l'épaisseur et/ou de la largeur des portions rigides et souples. L'armature de renfort de chaque portion souple formant charnière peut présenter des éléments de renforts supplémentaires spécifiques qui lui sont propres, en supplément à chaque couche de liaison formée par une couche de la structure de renfort des portions rigides reliées par cette portion souple. L'épaisseur de chaque portion rigide et celle de chaque portion souple n'est pas nécessairement la même, et toutes les variantes de réalisation imaginables sont possibles. Les deux portions rigides à relier ne sont pas nécessairement strictement identiques mais peuvent au contraire être différentes tant dans leurs formes que dans leurs dimensions... Rien n'empêche par ailleurs d'adjoindre, en tant que pièces rapportées, des garnitures sur l'une et/ou l'autre des faces principales des plaquettes rigides 10 et/ou des portions souples 11, pour conférer au dispositif des propriétés supplémentaires. Par exemple, rien n'empêche de prévoir des garnitures en alliage à mémoire de forme, des garnitures formant des butées limitant le déploiement angulaire de la charnière... De même, rien n'empêche de prévoir que de telles garnitures soient intégrées dans l'épaisseur des plaquettes 10 et/ou de chaque portion souple 11... Dans tous les modes de réalisation, les plaquettes 10 peuvent être cintrées (tuilées) dans le même sens (ou en sens contraire) autour d'un axe longitudinal sensiblement orthogonal à l'axe de pivotement théorique de la charnière, comme dans le deuxième mode de réalisation sus-décrit. Également, les extrémités des plaquettes reliées par chaque portion souple ne sont pas nécessairement des chants plans parallèles à l'autre comme dans les modes de réalisation représentés, mais peuvent présenter des formes différentes, plus tourmentées. Par exemple, les deux extrémités des plaquettes reliées par chaque portion souple ne sont pas nécessairement de la même forme ni, strictement, de mêmes dimensions. Les deux extrémités en regard des plaquettes reliées par chaque portion souple doivent cependant être écartées l'une de l'autre d'une distance suffisante pour permettre la flexion de chaque portion souple.

L'invention peut également faire l'objet de très nombreuses applications différentes pour réaliser une charnière souple fiable sans frottement à moindre coût. En particulier, un dispositif selon l'invention s'applique avantageusement pour réaliser une structure dépliable (déployable) ou repliable (escamotable) sur un système spatial, par exemple un mât déployable après lancement.

## Revendications

1. Dispositif comprenant au moins une portion (11) souple intégrée entre deux portions, dites portions (10) rigides, plus rigides que chaque portion (11) souple, chaque portion (10) rigide étant formée en matériau composite, dit matériau composite rigide, la dite portion (11) souple reliant les dites portions (10) rigides et étant adaptée pour former entre elles une charnière souple, chaque portion (10) rigide comprenant au moins une structure (12) de renfort d'un matériau composite rigide qui la compose, apte à impartir une résistance au moins en traction longitudinale à ce matériau composite rigide, et une matrice (14) au sein de laquelle s'étend la structure (12) de renfort, chaque portion (11) souple étant formée:
- d'au moins un matériau, dit matériau souple, choisi dans le groupe formé des matériaux, dits matériaux composites souples, comportant :
- une armature de renfort comprenant au moins une couche, dite couche (13) de liaison, d'une structure de renfort commune au(x) matériau(x) composite(s) rigide(s) formant chaque portion (10) rigide, chaque couche (13) de liaison s'étendant en continuité et en commun entre lesdites portions (10) rigides, et étant adaptée pour pouvoir être flexible, et
- une matrice au sein de laquelle s'étend l'armature de renfort, cette matrice (19) étant elle-même formée en matériau plus souple en flexion que celui constituant une matrice (14) de matériau composite rigide de chaque portion (10) rigide,
- d'au moins une couche (13) de liaison d'une structure de renfort commune au(x) matériau(x) composite(s) rigide(s) formant chaque portion (10) rigide, chaque couche (13) de liaison s'étendant en continuité et en commun entre lesdites portions (10) rigides, et étant adaptée pour pouvoir être flexible, **caractérisé en ce que** :
- il présente des chants (16, 20) en regard à l'état déployé dans lequel les portions (10) rigides et chaque portion (11) souple sont en prolongement les unes des autres, lesdits chants (16, 20) en regard étant agencés à l'état déployé pour pouvoir faire office de butée en compression longitudinale tout en autorisant un repliement de la charnière ainsi formée au moins dans un sens à partir de l'état déployé,
- au moins une portion (11) souple s'étend sur une partie seulement de l'épaisseur et/ou de la largeur de jonction desdites portions (10) rigides, et **en ce que** lesdites portions (10) rigides sont prolongées l'une vers l'autre selon au moins une autre partie de cette épaisseur et/ou de cette largeur de jonction, de façon à présenter lesdits chants (16, 20) en regard à l'état déployé,
- lesdits chants (16, 20) présentent des faces venant en contact l'une de l'autre et aptes à faire butées permettant de transmettre des efforts de compression longitudinale et/ou de torsion au travers de la charnière dépliée et/ou limitant dans un sens l'amplitude angulaire de déploiement de la charnière ainsi formée.

2. Dispositif selon la revendication 1, **caractérisé en ce qu'**au moins une couche (13) de liaison présente au moins un organe résistant en traction s'étendant longitudinalement continûment et de façon ininterrompue au sein des dites portions (10) rigides et de chaque portion (11) souple.

3. Dispositif selon l'une des revendications 1 ou 2, **caractérisé en ce que** ledit organe est choisi dans le groupe formé des monofils, des câbles, des faisceaux, des tissus, des non-tissés, des bandes, des nappes, des matelas, des feuilles et des complexes multicouches.

4. Dispositif selon l'une des revendications 1 à 3, **caractérisé en ce que** chaque couche (13) de liaison est choisie dans le groupe formé des nappes de fibres synthétiques tissées, des nappes de fibres synthétiques non-tissées, des matelas, des nappes de bandes synthétiques tissées, des nappes de bandes synthétiques non-tissées, des feuilles de matériaux synthétiques, des feuilles de matériaux métalliques, des complexes multicouches comprenant plusieurs couches, chaque couche étant en l'une de ces matières.

5. Dispositif selon l'une des revendications 1 à 4, **caractérisé en ce que** chaque couche de la structure (12) de renfort du matériau composite rigide formant lesdites portions (10) rigides s'étend continûment entre les portions (10) rigides de façon à former une couche de liaison.

6. Dispositif selon l'une des revendications 1 à 5, **caractérisé en ce que** lesdites portions (10) rigides et chaque portion (11) souple présentent des épaisseurs similaires.

7. Dispositif selon l'une des revendications 1 à 6, **caractérisé en ce que** seule une partie de la structure (12) de renfort desdites portions (10) rigides s'étend continûment entre les portions (10) rigides de façon à faire office de couche(s) de liaison, l'autre partie de la structure de renfort desdites portions (10) rigides étant interrompue entre les deux portions (10) rigides.

8. Dispositif selon l'une des revendications 1 à 7, **caractérisé en ce que** l'armature de renfort du matériau souple est constituée uniquement d'au moins une couche (13) de liaison.

9. Dispositif selon l'une des revendications 1 à 8, **caractérisé en ce que** la matrice (19) dudit matériau composite souple est formée d'un matériau choisi dans le groupe formé des caoutchoucs naturels (NR); des élastomères; des résines de polyéthylène; des résines de polystyrène; des mousses de polyéthylène; des mousses de polystyrène; des mousses de polyuréthane.

10. Dispositif selon l'une des revendications 1 à 9, **caractérisé en ce qu'**il comprend une portion (11) souple s'étendant continûment selon toute la largeur de jonction desdites portions (10) rigides.

11. Dispositif selon l'une des revendications 1 à 10, **caractérisé en ce qu'**il comprend plusieurs portions (11) souples distinctes et séparées les unes des autres, réparties dans la largeur de jonction entre lesdites portions (10) rigides.

12. Dispositif selon l'une des revendications 1 à 11, **caractérisé en ce qu'**il comprend des garnitures rapportées en surépaisseur sur chaque portion rigide, lesdites garnitures étant disposées de façon à présenter des faces venant en contact l'une de l'autre et aptes à faire butées permettant de transmettre des efforts de compression longitudinale et/ou de torsion au travers de la charnière dépliée et/ou limitant dans un sens l'amplitude angulaire de déploiement de la charnière ainsi formée.

13. Dispositif selon l'une des revendications 1 à 12, **caractérisé en ce que** chaque portion (10) rigide est en forme générale de bande ressort cintrée suivant un axe longitudinal et chaque portion (11) souple est également en forme générale de bande cintrée selon le même axe.

## Patentansprüche

1. Vorrichtung, umfassend mindestens einen flexiblen Abschnitt (11), der zwischen zwei Abschnitten integriert ist, genannt starre Abschnitte (10), starrer als jeder flexible Abschnitt (11), wobei jeder starre Abschnitt (10) aus Verbundmaterial gebildet ist, genannt starres Verbundmaterial, wobei der flexible Abschnitt (11) die starren Abschnitte (10) verbindet und ausgelegt ist, um zwischen ihnen ein flexibles Scharnier zu bilden, wobei jeder starre Abschnitt (10) mindestens eine Verstärkungsstruktur (12) eines starren Verbundmaterials, aus dem er besteht, umfasst, dazu ausgelegt, um diesem starren Verbundmaterial eine Widerstandskraft mindestens bei der längs gerichteten Traktion zu verleihen, und eine Matrix (14), innerhalb der sich die Verstärkungsstruktur (12) erstreckt, wobei jeder flexible Abschnitt (11) aus Folgendem gebildet ist:
- mindestens einem Material, genannt flexibles Material, ausgewählt aus der Gruppe, bestehend aus Materialien, genannt flexible Verbundmaterialien, umfassend:
- eine Verstärkungseinlage, umfassend mindestens eine Schicht, genannt Verbindungsschicht (13), einer Verstärkungsstruktur, die dem/den starren Verbundmaterial(ien) gemeinsam ist, die jeden starren Abschnitt (10) bilden, wobei sich jede Verbindungsschicht (13) anschließend und gemeinsam zwischen den starren Abschnitten (10) erstreckt und ausgelegt ist, um flexibel sein zu können, und
- eine Matrix, innerhalb der sich die Verstärkungsstruktur erstreckt, wobei diese Matrix (19) selbst aus einem flexibleren Material als demjenigen gebildet ist, das eine Matrix (14) aus starrem Verbundmaterial jedes starren Abschnitts (10) bildet,
- mindestens eine Verbindungsschicht (13) einer Verstärkungsstruktur, die dem/den starren Verbundmaterial(ien) gemeinsam ist, die jeden starren Abschnitt (10) bilden, wobei sich jede Verbindungsschicht (13) anschließend und gemeinsam zwischen den starren Abschnitten (10) erstreckt und ausgelegt ist, um flexibel sein zu können, **dadurch gekennzeichnet, dass**
- sie Kanten (16, 20) gegenüber dem geöffneten Zustand aufweist, in dem die starren Abschnitte (10) und jeder flexible Abschnitt (11) aneinander verlängern, wobei die einander gegenüber liegenden Kanten (16, 20) im geöffneten Zustand angeordnet sind, um bei einem längs gerichtetem Zusammendrücken als Anschlag dienen zu können, und gleichzeitig ein Zusammenklappen des so gebildeten Scharniers mindestens in eine Richtung ausgehend vom geöffneten Zustand zu ermöglichen,
- mindesten ein flexibler Abschnitt (11) sich nur auf einem Teil der Dicke und/oder der Verbindungsbreite der starren Abschnitte (10) erstreckt, und dadurch, dass die starren Abschnitte (10) zueinander verlängert sind, gemäß mindestens einem weiteren Teil dieser Dicke und/oder dieser Verbindungsbreite, um die einander gegenüber liegenden Kanten (16, 20) im offenen Zustand aufzuweisen.
- die Kannten (16, 20) Stirnseiten aufweisen, die miteinander in Kontakt kommen und dazu ausgelegt sind, Anschläge zu bilden, die ermöglichen, längs gerichtete Zusammendrück- und/oder Torsionskräfte über das auseinander geklappte Scharnier auszuüben und/oder in einer Richtung die Winkelamplitude der Öffnung des so gebildeten Scharniers begrenzen.

2. Vorrichtung nach Anspruch 1, **dadurch gekennzeichnet, dass** mindestens eine Verbindungsschicht (13) mindestens ein Element aufweist, das in der Traktion widerstandsfähig ist, das sich in der Länge kontinuierlich und auf ununterbrochene Weise und innerhalb der starren (10) Abschnitte und jedes flexiblen Abschnitts (11) erstreckt.

3. Vorrichtung nach einem der Ansprüche 1 oder 2, **dadurch gekennzeichnet, dass** das Element ausgewählt ist aus der Gruppe, bestehend aus Monodrähten, Kabeln, Bündeln, Geweben, Nicht-Geweben, Streifen, Matten, Polstern, Blättern und vielschichtigen Komplexen.

4. Vorrichtung nach einem der Ansprüche 1 bis 3, **dadurch gekennzeichnet, dass** jede Verbindungsschicht (13) ausgewählt ist aus der Gruppe bestehend aus Matten aus gewebten synthetischen Fasern, Matten aus nicht gewebten synthetischen Fasern, Polstern, Matten aus gewebten synthetischen Streifen, Matten aus nicht gewebten synthetischen Streifen, Blättern aus synthetischen Materialien, Blättern aus metallischen Materialien, vielschichtigen Komplexen, umfassend mehrere Schichten, wobei jede Schicht aus einem dieser Materialien besteht.

5. Vorrichtung nach einem der Ansprüche 1 bis 4, **dadurch gekennzeichnet, dass** sich jede Schicht der Verstärkungsstruktur (12) des starren Verbundmaterials, das die starren Abschnitte (10) bildet, kontinuierlich zwischen den starren Abschnitten (10) derart erstreckt, dass es eine Verbindungsschicht bildet.

6. Vorrichtung nach einem der Ansprüche 1 bis 5, **dadurch gekennzeichnet, dass** die starren Abschnitte (10) und jeder flexible Abschnitt (11) ähnliche Dicken aufweisen.

7. Vorrichtung nach einem der Ansprüche 1 bis 6, **dadurch gekennzeichnet, dass** sich nur ein Teil der Verstärkungsstruktur (12) der starren Abschnitte (10) kontinuierlich zwischen den starren Abschnitten (10) derart erstreckt, dass er als Verbindungsschicht(en) dient, wobei der andere Teil der Verstärkungsstruktur (12) der starren Abschnitte (10) zwischen den zwei starren Abschnitten (10) unterbrochen ist.

8. Vorrichtung nach einem der Ansprüche 1 bis 7, **dadurch gekennzeichnet, dass** die Verstärkungseinlage des flexiblen Materials nur aus mindestens einer Verbindungsschicht (13) besteht.

9. Vorrichtung nach einem der Ansprüche 1 bis 8, **dadurch gekennzeichnet, dass** die Matrix (19) des flexiblen Verbundmaterials aus einem Material gebildet ist, ausgewählt aus der Gruppe, bestehend aus Naturkautschuk (NR), Elastomeren, Polyethylenharzen, Polystyrenharzen; Polyethylenschäumen; Polystyrenschäumen; Polyurethanschäumen.

10. Vorrichtung nach einem der Ansprüche 1 bis 9, **dadurch gekennzeichnet, dass** sie einen flexiblen Abschnitt (11) umfasst, der sich kontinuierlich auf der gesamten Verbindungsbreite der starren Abschnitte (10) erstreckt.

11. Vorrichtung nach einem der Ansprüche 1 bis 10, **dadurch gekennzeichnet, dass** sie mehrere verschiedene und voneinander getrennte flexible Abschnitte (11) umfasst, die auf der Verbindungsbreite zwischen den starren Abschnitten (10) verteilt sind.

12. Vorrichtung nach einem der Ansprüche 1 bis 11, **dadurch gekennzeichnet, dass** sie Beläge umfasst, die auf jedem starren Abschnitt überhöht aufgesetzt sind, wobei die Beläge derart angeordnet sind, dass sie Kanten aufweisen, die miteinander in Kontakt kommen und ausgelegt sind, um Anschläge zu bilden, die ermöglichen, längs gerichtete Zusammendrück- und/oder Torsionskräfte über das auseinander geklappte Scharnier auszuüben und/oder in einer Richtung die Winkelamplitude der Öffnung des so gebildeten Scharniers zu begrenzen.

13. Vorrichtung nach einem der Ansprüche 1 bis 12, **dadurch gekennzeichnet, dass** jeder starre Abschnitt (10) die allgemeine Form einer Streifenfeder aufweist, die gemäß einer Längsachse gebogen ist, und jeder flexible Abschnitt (11) auch die allgemeine Form eines Streifens aufweist, der gemäß der gleichen Achse gebogen ist.

## Claims

1. A device comprising at least one flexible portion (11) which is built in between two portions , named stiff portions (10), which are stiffer than each flexible portion (11), each stiff portion (10) being made of composite material, named stiff composite material, said flexible portion (11) connecting said stiff portions (10) and being arranged to form a flexible hinge between the stiff portions, each stiff portion (10) comprising at least one reinforcement structure (12) of a stiff composite material which constitutes it, which can impart resistance at least in longitudinal traction to said stiff composite material, and a matrix (14) within which the reinforcement structure (12) extends, each flexible portion (11) being formed:
- by at least one material, named flexible material, selected from the group formed by the materials, named flexible composite materials, comprising:
- a reinforcing armature comprising at least one layer, named connection layer (13), of a reinforcement structure which is common to the stiff composite material(s) which form(s) each stiff portion (10), each connection layer (13) extending continuously and in common between said stiff portions (10), and being adapted to be flexible; and
- a matrix within which the reinforcing armature extends, this matrix (19) itself being formed by a material which is more flexible in flexure than the material which constitutes a matrix (14) of stiff composite material of each stiff portion (10);
- by at least one connection layer (13) of a reinforcement structure which is common to the stiff composite material(s) which form(s) each stiff portion (10), with each connection layer (13) extending continuously and in common between said stiff portions (10), and being adapted to be flexible,
**characterized in that**:
- the device has end surfaces (16, 20) that oppose each other when in an extended state, and the stiff portions (10) and each flexible portion (11) are in the extension of one another, said opposing end surfaces (16, 20) being arranged in the extended state to be suited to serve as a longitudinal compression abutment, whilst enabling the hinge thus formed to fold back, at least in a direction away from the extended state.
- at least one flexible portion (11) extends along only part of the thickness and/or the joining width of the said stiff portions (10), and said stiff portions (10) are extended towards one another according to at least one other part of this thickness and/or this joining width, such as to have said end surfaces (16, 20) opposing each other when extended.
- said end surfaces (16, 20) have faces which come into contact with each other, and can act as abutments suited to transmit longitudinal compression and/or torsion forces through the unfolded hinge, and/or which limit in one direction the angular amplitude of extension of the hinge thus formed.

2. Device according to claim 1, **characterised in that** at least one connection layer (13) has at least one unit which is resistant in traction, and extends longitudinally, continuously and in an uninterrupted manner within said stiff portions (10) and each flexible portion (11).

3. Device according to any one of claims 1 or 2, **characterised in that** said unit is selected from the group formed by monofilaments, cables, bundles, fabrics, non-woven fabrics, strips, sheets, mats and leaves, and complex multiple layers.

4. Device according to any one of claims 1 to 3, **characterised in that** each connection layer (13) is selected from the group formed by sheets of woven synthetic fibers, sheets of non-woven synthetic fibers, mats, sheets of woven synthetic strips, sheets of non-woven synthetic strips, leaves of synthetic materials, leaves of metal materials, and multiple-layer complex substances comprising a plurality of layers, with each layer being one of these materials.

5. Device according to any one of claims 1 to 4, **characterised in that** each layer of the reinforcement structure (12) of the stiff composite material which forms said stiff portions (10) extends continuously between the stiff portions (10), such as to form a connection layer.

6. Device according to any one of claims 1 to 5, **characterised in that** said stiff portions (10) and each flexible portion (11) have similar thicknesses.

7. Device according to any one of claims 1 to 6, **characterised in that** only a part of the reinforcement structure (12) of said stiff portions (10) extends continuously between the stiff portions (10), such as to serve as a connection layer/ connection layers, the other part of the reinforcement structure of said stiff portions (10) being interrupted between the two stiff portions (10).

8. Device according to any one of claims 1 to 7, **characterised in that** the reinforcing armature of the flexible material is constituted only by at least one connection layer (13).

9. Device according to any one of claims 1 to 8, **characterised in that** the matrix (19) of said flexible composite material is formed by a material selected from the group formed by natural rubbers (NR); elastomers; polyethylene resins; polystyrene resins; polyethylene foams; polystyrene foams; polyurethane foams.

10. Device according to any one of claims 1 to 9, **characterised in that** it comprises a flexible portion (11) which extends continuously according to the entire joining width of said stiff portions (10).

11. Device according to any one of claims 1 to 10, **characterised in that** it comprises a plurality of distinct flexible portions (11) separated from one another, which are distributed along the joining width between said stiff portions (10).

12. Device according to any one of claims 1 to 11, **characterised in that** it comprises mountings which are added as additional thickness onto each stiff portion, said mountings being disposed such as to have faces which come into contact with each other, and can act as abutments which make it possible to transmit longitudinal compression and/or torsion forces through the unfolded hinge, and/or which limit in one direction the angular amplitude of extension of the hinge thus formed.

13. Device according to any one of claims 1 to 12, **characterised in that** each stiff portion (10) is in the general form of a spring strip which is curved according to a longitudinal axis, and each flexible portion (11) is also in the general form of a strip which is curved according to the same axis.
